# EUROPÄISCHE PATENTSCHRIFT

(11) **EP 2 526 000 B1**
(45) Veröffentlichungstag und Bekanntmachung des Hinweises auf die Patenterteilung: **23.10.2013**
(21) Anmeldenummer: 10795219.4
(22) Anmeldetag: 07.12.2010
(51) Int. Cl.: B60R 21/01, B60N 2/42, B60N 2/427, B60R 21/0134

(54) **VERFAHREN UND VORRICHTUNG ZUR VERRINGERUNG DER AUF EINEN FAHRZEUGINSASSEN WIRKENDEN UNFALLFOLGEN**
METHOD AND DEVICE FOR LESSENING THE CONSEQUENCES OF AN ACCIDENT ON A VEHICLE OCCUPANT
PROCÉDÉ ET DISPOSITIF PERMETTANT DE RÉDUIRE LES CONSÉQUENCES D'UN ACCIDENT SUR UN OCCUPANT DE VÉHICULE

(30) Priorität: 22.01.2010 DE 102010005408
(43) Veröffentlichungstag der Anmeldung: 28.11.2012
(73) Patentinhaber: Bayerische Motoren Werke Aktiengesellschaft, 80809 München (DE)
(72) Erfinder: ZIMMERMANN, Markus, 81541 Muenchen (DE); GRUBER, Christian, 81829 Muenchen (DE)
(86) Internationale Anmeldenummer: PCT/EP2010/007412
(87) Internationale Veröffentlichungsnummer: WO 2011/088867

(56) Entgegenhaltungen:
- WO-A1-2008/110610
- DE-A1- 10 321 871
- DE-A1-102004 012 880
- US-A- 5 626 203

## Beschreibung

Die vorliegende Erfindung betrifft ein Verfahren zur Verringerung der auf einen Fahrzeuginsassen wirkenden unfallbedingten Folgen beim Aufprall des Fahrzeugs auf ein Hindernis nach dem Oberbegriff des Anspruchs 1. Die Erfindung betrifft darüber hinaus eine Vorrichtung zur Durchführung des Verfahrens nach dem Anspruch 7.

Es sind bereits Rückhaltesysteme in Fahrzeugen bekannt geworden, die dazu vorgesehen sind, die auf den Insassen wirkenden Unfallfolgen beim Aufprall des Fahrzeugs auf ein Hindernis zu verringern. Solche bekannte Systeme weisen üblicherweise Gurtsysteme und Airbagsysteme auf, wobei die Gurtsysteme eine Strammerfunktion aufweisen, die den am Fahrzeuginsassen anliegenden Gurt oder Sicherheitsgurt im oder kurz vor dem Augenblick des Aufpralls des Fahrzeugs auf ein Hindernis stramm ziehen. Bei den bekannten Airbagsystemen handelt es sich beispielsweise um einen Frontairbag, einen Knieairbag, einen Seitenairbag, einen Thoraxbag oder dergleichen, die sowohl für den Fahrer als auch für den Beifahrer vorgesehen sind.

Diese Rückhaltesysteme tragen bereits erheblich zur Verringerung des Verletzungsrisikos der Fahrzeuginsassen bei, besitzen aber Potenzial für Verbesserungen.

Eine typische Aufprallsituation kann darin bestehen, dass das Fahrzeug mit einem stehenden Hindernis oder einem entgegenkommenden anderen Fahrzeug frontal kollidiert. Im Augenblick der Kollision sitzt der Fahrzeuginsasse im Fahrzeug auf seinem Sitz und sein Rücken befindet sich mit der Rückenfläche des Sitzes in Kontakt. Auf Grund seiner trägen Masse erfährt der Fahrzeuginsasse im Kollisionszeitpunkt eine Verlagerungsbewegung in Richtung der Fahrzeugbewegung und wird dann vom Rückhaltesystem zurückgehalten. Der Fahrzeuginsasse wird dabei von einer der Fahrzeuggeschwindigkeit entsprechenden Geschwindigkeit bis auf eine Geschwindigkeit gleich Null abgebremst und erfährt während dieser Zeit eine dem Produkt aus seiner Masse und der beim Abbremsvorgang wirkenden Beschleunigung entsprechende Kraftbeaufschlagung.

Bei einem solchen Rückhaltesystem handelt es sich um ein Element aus dem Bereich der passiven Sicherheit, welches sich mit die Unfallfolgen mindernden Maßnahmen befasst. Ein weiteres Element aus dem Bereich der Fahrzeugsicherheit ist die sogenannte aktive Sicherheit, die bei der Unfallvermeidung ansetzt, um die Unfallhäufigkeit herabzusetzen. Beide Disziplinen sind Komponenten der integralen Sicherheit, die sich mit der gesamten Unfalleskalationskette befasst und die Wirksamkeit von Schutzvorrichtungen betrachtet und der Verbesserung des Schutzpotenzials aller Verkehrsteilnehmer dient.

Ein Bestandteil aktueller Entwicklungsbestrebungen ist die Erkennung von Gefahrensituationen während des normalen Fahrzustands eines Fahrzeugs vor einem Unfall, um rechtzeitig Maßnahmen der aktiven und passiven Sicherheitssysteme einzuleiten. Hierzu zählen beispielsweise Früherkennungssysteme, die beispielsweise mittels Kamera oder Radar oder der car-to-car-Kommunikation arbeiten und mit der Einleitung schützender Maßnahmen beginnen, bevor der eigentliche Unfall stattfindet. Wie vorstehend bereits erwähnt wurde, wird der Fahrzeuginsasse ab Beginn des Unfalls in die Richtung beschleunigt, die dem Kollisionspartner entgegen gesetzt ist, d.h. er wird verzögert, um möglichst gleichmäßig abzubremsen.

Für die auf den Fahrzeuginsassen wirkenden Belastungen sind dann die Änderung der Geschwindigkeit und die dafür zur Verfügung stehende Zeitdauer maßgeblich oder, mit anderen Worten, der zur Verfügung stehende Abbremsweg.

Aus der DE 103 21 871 A1 ist ein Fahrzeuginsassenschutzsystem bekannt, wobei beim Erkennen einer Kollision der Fahrzeugsitz in eine sichere Lage bewegt wird.

Aufgabe der vorliegenden Erfindung ist die Schaffung eines Verfahrens und einer Vorrichtung zur Verringerung der auf einen Fahrzeuginsassen wirkenden unfallbedingten Folgen beim Aufprall des Fahrzeugs auf ein Hindernis.

Die Erfindung weist zur Lösung dieser Aufgabe hinsichtlich des Verfahrens die im Anspruch 1 angegebenen Merkmale auf. Vorteilhafte Ausgestaltungen hiervon sind in den weiteren Ansprüchen geschrieben.

Die Erfindung weist darüber hinaus hinsichtlich der Vorrichtung die im Anspruch 7 angegebenen Merkmale auf.

Die Erfindung sieht ein Verfahren vor zur Verringerung der auf einen Fahrzeuginsassen wirkenden unfallbedingten Folgen beim Aufprall des Fahrzeugs auf ein Hindernis, wobei nach dem Verfahren vor dem Aufprall die Absolutgeschwindigkeit des Fahrzeuginsassen bezogen auf das Hindernis unabhängig von der Führungsgeschwindigkeit des Fahrzeugs durch eine Verringerung der Geschwindigkeit des Fahrzeuginsassen relativ zum Fahrzeug verringert wird, ohne dass der Fahrzeuginsasse eine erste Verlagerungsbewegung entgegen der Fahrzeugsbewegungsrichtung über seine bei der Fahrt bestimmungsgemäße Ausgangsposition hinaus erfährt.

Der vorliegenden Erfindung liegt der grundsätzliche Gedanke zugrunde, die Geschwindigkeitsdifferenz, die der Fahrzeuginsasse zwischen dem Kollisionszeitpunkt und dem Stillstand des Fahrzeugs erfährt, zu verringern und auf diese Weise die auf den Fahrzeuginsassen wirkende Kraftbelastung zu verringern und zwar ohne, dass der Fahrzeuginsasse eine erste Verlagerungsbewegung entgegen der Fahrzeugbewegungsrichtung über seine bei einer normalen, d.h. bestimmungsgemäßen Ausgangsposition hinaus erfährt. Der Fahrzeuginsasse wird also nach dem erfindungsgemäßen Verfahren in Fahrzeugbewegungsrichtung betrachtet zunächst nicht über seine bei einer normalen und bestimmungsgemäßen Fahrt eingenommene Ausgangsposition in Richtung entgegen der Fahrzeugsbewegungsrichtung hinaus nach hinten verlagert.

Dieser Vorgehensweise liegt die überraschende Erkenntnis zugrunde, dass sich eine erheblich geringere Insassenbelastung dann ergibt, wenn der Fahrzeuginsasse nicht ab Beginn des Unfalls in eine dem Kollisionspartner entgegengesetzte Richtung beschleunigt wird, sondern der Fahrzeuginsasse vor der eigentlichen Kollision des Fahrzeugs mit dem Hindernis in Richtung des Kollisionspartner beschleunigt wird und dabei eine Vorverlagerungsbewegung durchläuft und erst nach dieser Vorverlagerungsbewegung eine dem Kollisionspartner entgegen gerichtete Rückverlagerungsbewegung erfährt.

Zu diesem Zweck ist nach einer Weiterbildung der Erfindung die Betätigung von Mitteln vorgesehen, die den Fahrzeuginsassen in einer ersten Zeitdauer vor dem Aufprall auf eine Absolutgeschwindigkeit beschleunigen, die höher ist als die Führungsgeschwindigkeit des Fahrzeugs und die Betätigung von Mitteln, die den Fahrzeuginsassen in einer zweiten Zeitdauer vor dem Aufprall auf eine Geschwindigkeit unter die Führungsgeschwindigkeit des Fahrzeugs beim Aufprall auf das Hindernis abbremsen.

Es bedeutet dies mit anderen Worten, dass der Fahrzeuginsasse vor der eigentlichen Kollision eine Vorverlagerungsbewegung erfährt und anschließend wieder abgebremst wird, indem er vom Kollisionspartner weg beschleunigt wird. Dadurch erfährt der Fahrzeuginsasse eine Rückverlagerungsbewegung und befindet sich zum Kollisionszeitpunkt wieder näher an seiner Ausgangsposition vor dem Unfall, also seiner bestimmungsgemäßen Sitzposition, aber jetzt mit deutlich verminderter Geschwindigkeit gemessen relativ zum Kollisionspartner gesehen, also dem Hindernis.

Auf diese Weise wird die Absolutgeschwindigkeit des Fahrzeuginsassen im Unfallzeitpunkt, also dem Zeitpunkt des Aufpralls des Fahrzeugs auf das Hindernis unabhängig von der Führungsgeschwindigkeit des Fahrzeugs verringert und der Fahrzeuginsasse erfährt keine erste Verlagerungsbewegung entgegen der Fahrzeugbewegungsrichtung - also in Richtung nach hinten betrachtet bei einem Frontalunfall - über seine bei der normalen und bestimmungsgemäßen Ausgangsposition hinaus.

Auf diese Weise wird auch dem anzunehmenden Fall Rechnung getragen, dass der Fahrzeuginsasse nicht vor dem Unfallzeitpunkt wesentlich in Richtung nach hinten, also aus seiner normalen und bestimmungsgemäßen Ausgangsposition heraus, auf die Fahrzeugbewegungsrichtung bezogen, verlagert werden kann, also vorkonditioniert werden kann, weil sich hinter dem Fahrzeuginsassen beispielsweise Gepäck befindet oder weitere Fahrzeuginsassen, deren Beine nicht durch eine wesentliche Rückverlagerung der Rückenlehne des Sitzes des Fahrzeuginsassen in Richtung nach hinten verletzt werden dürfen.

Der Fahrzeuginsasse erfährt also in einer ersten Zeitdauer vor dem Aufprall des Fahrzeugs auf das Hindernis zunächst eine Beschleunigung in Richtung zum Kollisionspartner hin, wird dann entgegengesetzt dieser Bewegungsrichtung in Richtung nach hinten beschleunigt, so dass sich die Geschwindigkeit des Fahrzeuginsassen relativ zum Hindernis zum Kollisionszeitpunkt unterhalb der Geschwindigkeit des Fahrzeugs im Zeitpunkt der Kollision befindet und daher die auf den Fahrzeuginsassen wirkende Beschleunigungskomponente bis zum Stillstand des Fahrzeugs deutlich niedriger ist als eine vergleichbare Beschleunigungskomponente, die sich dann ergeben würde, wenn der Fahrzeuginsasse im Kollisionszeitpunkt eine der Führungsgeschwindigkeit des Fahrzeugs entsprechende Geschwindigkeit relativ zum Hindernis aufweisen würde.

Der nach der Kollision ablaufende Unfallverlauf erfolgt unter weiterer Zuhilfenahme des Rückhaltesystems mit dem Vorteil einer deutlich niedrigeren Geschwindigkeitsänderung, die der Fahrzeuginsasse durchlaufen muss, so dass seine mittlere Verzögerung erheblich verringert ist und daher die auf den Fahrzeuginsassen wirkende Belastung deutlich abnimmt.

Nach einer Weiterbildung der Erfindung ist es vorgesehen, dass die Mittel den Fahrzeuginsassen zu einer Verlagerungsbewegung in/oder entgegen der Fahrzeugsbewegungsrichtung mit jeweils weitgehend gleich bleibendem Beschleunigungsbetrag beschleunigen. Es bedeutet dies mit anderen Worten, dass die auf den Fahrzeuginsassen wirkenden Mittel so einwirken, dass der Fahrzeuginsasse während seiner Vorverlagerungsbewegung mit einer weitgehend gleichbleibenden Beschleunigung beaufschlagt wird und auch während seiner Rückverlagerungsbewegung während der zweiten Zeitdauer entgegen der Fahrzeugbewegungsrichtung mit einer weitgehend gleichbleibenden Beschleunigung beaufschlagt wird, so dass Belastungsspitzen, die vor Beschleunigungsspitzen herrühren, weitgehend vermieden werden können.

Es ist dabei nach einer Weiterbildung der Erfindung vorgesehen, dass die Mittel den Fahrzeuginsassen während der ersten Zeitdauer mit einem Beschleunigungsfaktor kleiner oder gleich weitgehend der sechsfachen Erdbeschleunigung beaufschlagen. Hierdurch wird sichergestellt, dass der Fahrzeuginsasse während seiner Vorwärtsverlagerungsbewegung keine Kräfte erfährt, die ein Verletzungsrisiko hervorrufen könnten.

Nach einer Weiterbildung der Erfindung ist es vorgesehen, dass die Mittel den Fahrzeuginsassen währen der zweiten Zeitdauer mit einem Beschleunigungsfaktor beaufschlagen derart, dass der Fahrzeuginsasse vor dem Aufprall eine negative Geschwindigkeit relativ zum Fahrzeug erfährt und beibehält. Hierdurch wird erreicht, dass der Fahrzeuginsasse während seiner, der Bewegungsrichtung des Fahrzeugs entgegen gesetzt gerichteten Bewegung nicht wieder von der Lehne seines Sitzes soweit abgebremst wird, dass seine Geschwindigkeit relativ zum Hindernis wieder der Führungsgeschwindigkeit des Fahrzeugs entspricht. Es wird damit mit anderen Worten erreicht, dass der Fahrzeuginsasse nicht an der Sitzlehne ankoppelt derart, dass seine Bewegungskomponente in Richtung nach hinten vollständig zum Erliegen kommt. Zu diesem Zweck kann - sofern hinter der Sitzlehne hierfür Platz ist, was beispielsweise durch eine Sitzbelegungserkennung eines hinter dem Fahrzeuginsassensitz angeordneten weiteren Fahrzeugsitzes erkannt werden kann - die Sitzlehne auch in Richtung nach hinten verlagert werden.

Die zweite Zeitdauer mit der Rückwärtsverlagerungsbewegung des Fahrzeuginsassen beginnt vor einem körperlichen Kontakt des Fahrzeuginsassen mit einem näherungsweise starren Körper des Fahrzeugs, also beispielsweise dem Lenkrad, so dass die während der ersten Zeitdauer induzierte Vorwärtsverlagerung des Fahrzeuginsassen beendet wird, bevor der Fahrzeuginsasse mit diesem starren Körper in Kontakt kommt.

Ganz allgemein ist nach dem erfindungsgemäßen Verfahren vorgesehen, dass die Mittel den Fahrzeuginsassen derart beaufschlagen, dass dieser während der ersten und zweiten Zeitdauer mit seinem Oberkörper in Fahrzeugbewegungsrichtung im Bereich zwischen einer Steuereinrichtung und einer Sitzeinrichtung des Fahrzeugs verbleibt, der Fahrzeuginsasse also während der ersten und zweiten Zeitdauer nicht mit der einen weitgehend starren Körper darstellenden Steuereinrichtung des Fahrzeugs in Kontakt kommt und sich auch im Kollisionszeitpunkt noch nicht wieder mit der Sitzeinrichtung des Fahrzeugs derart in Kontakt befindet, dass seine Relativgeschwindigkeitskomponente zum Fahrzeug auf Null verringert wird.

Werden diese Bedingungen mit dem für den Fahrzeuginsassen zur Verfügung stehenden Verlagerungsweg ausgedrückt, so findet zunächst ein Vorverlagerungsweg statt, dem ein mit einem negativen Vorzeichen versehener Rückverlagerungsweg überlagert wird, so dass der Betrag des während der Verlagerungsbewegungen zurückgelegten Wegs kleiner als der maximal zulässige Rückverlagerungsweg ist.

Im Kollisionszeitpunkt besitzt der Fahrzeuginsasse noch eine Bewegungskomponente relativ zum Fahrzeug entgegen der Fahrzeugbewegungsrichtung und erfährt dann auf Grund des Kollisionsimpulses eine zweite Vorverlagerungsbewegung, die vom Rückhaltesystem wieder aufgefangen wird. Der Betrag aus dem ersten Vorverlagerungsweg und dem Rückverlagerungsweg sowie dem zweiten Vorverlagerungsweg ist daher kleiner als der maximal zulässige Vorverlagerungsweg, der in Fahrzeugbewegungsrichtung durch einen starren Körper, beispielsweise durch das vorstehend bereits erwähnte Lenkrad des Fahrzeugs bestimmt wird.

Die auf den Fahrzeuginsassen wirkende mittlere Verzögerung ist dabei wesentlich kleiner als die sich aus einem klassischen Unfallverlauf ergebende mittlere Verzögerung bei einem Rückhaltesystem nach dem Stand der Technik. Der klassische Unfallverlauf besteht dabei darin, dass der Fahrzeuginsasse im Kollisionszeitpunkt zunächst noch eine Bewegungskomponente in Richtung nach vorne erfährt und dann eine Beschleunigung erfährt, die ihn vom Kollisionspartner entgegen gesetzt gerichtet beschleunigt.

Die Erfindung sieht darüber hinaus auch vor, dass die Mittel Bestandteile eines Fahrzeuginsassen-Rückhaltesystems sind und zur Beschleunigung des Fahrzeuginsassen während der ersten Zeitdauer einen Gassack umfassen und die Mittel zur Beschleunigung des Fahrzeuginsassen während der zweiten Zeitdauer einen Gurt und/oder einen Gassack umfassen.

Damit kann zur Beschleunigung, d.h. zur vorwärts gerichteten Bewegung des Fahrzeuginsassen während der ersten Zeitdauer ein in der Sitzlehne des Sitzes des Fahrzeuginsassen integrierter Airbag zum Einsatz kommen und der Fahrzeuginsasse während der zweiten Zeitdauer durch einen Sicherheitsgurt und/oder einen im Lenkrad des Fahrzeug integrierten Gassack abgebremst beziehungsweise entgegen der Fahrzeugbewegungsrichtung in Richtung nach hinten beschleunigt werden.

Die Erfindung wird im Folgenden anhand der Zeichnung näher erläutert. Diese zeigt in:
- Fig. 1: ein Diagram der Geschwindigkeit über der Zeit zur Erläuterung des erfindungsgemäßen Verfahrens;
- Fig. 2: schematische Darstellungen der Positionen eines Fahrzeuginsassen während der Vorkonditionierung und des Unfallverlaufs.

Ein nicht näher dargestelltes Fahrzeug, in dem der Fahrzeuginsasse sitzt, bewegt sich mit einer Geschwindigkeit v_0, die in der Grafik der dick ausgezogenen schwarzen Linie mit dem Bezugszeichen 6 entspricht. Im Zeitpunkt t=0 findet die Kollision des Fahrzeugs mit dem Hindernis statt. Eine solche, nicht mehr vermeidbare Unfallsituation wird beispielsweise über ein Kamera-basiertes Erkennungssystem des Fahrzeugs bereits vor dem Unfall festgestellt, so dass die erfindungsgemäßen Maßnahmen vor dem Unfall eingeleitet werden können.

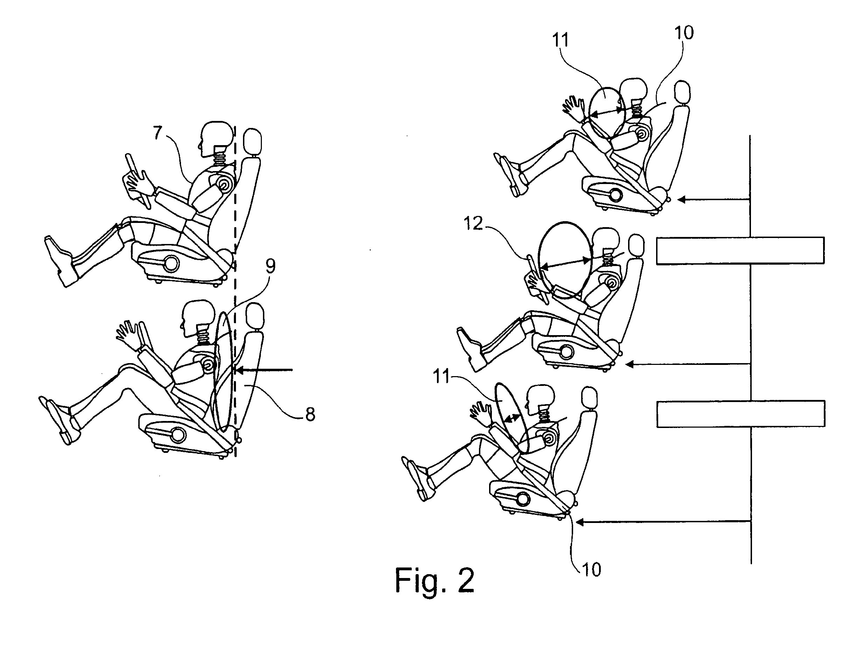

Die Geschwindigkeit des Fahrzeugs und des in Fig. 2 schematisch dargestellten Fahrzeuginsassen 7 betragen während der normalen und bestimmungsgemäßen Fahrt, zu der der Fahrzeuginsasse 7 auch seine Ausgangsposition besitzt, ebenfalls v_0, d.h. die Absolutgeschwindigkeit der Fahrzeuginsassen 7 relativ zum Hindernis stimmen weit vor dem Unfallzeitpunkt überein.

Durch das Erkennungssystem des Fahrzeugs wurde festgestellt, dass eine Kollision mit dem Hindernis nicht mehr vermieden werden kann, und zum Zeitpunkt t_v<0 wird der Fahrzeuginsasse in Richtung zum Kollisionspartner hin beschleunigt, wobei zu diesem Zweck beispielsweise in der Sitzlehne 8 ein Sitzairbag 9 vorgesehen sein kann.

Hierdurch steigt die Geschwindigkeit des Fahrzeuginsassen relativ zur Fahrzeuggeschwindigkeit an, der Fahrzeuginsasse besitzt die Geschwindigkeit v_p und erfährt eine Vorverlagerung 1 und zum Zeitpunkt t_r wird der Fahrzeuginsasse wieder in Richtung vom Kollisionspartner weg beschleunigt, wobei hierzu ein in Fig. 2 dargestellter Sicherheitsgurt 10 zum Einsatz kommen kann.

Optional oder zusätzlich zu dem Sicherheitsgurt 10 kann ein im Lenkrad 12 integrierter Airbag 11 zum Einsatz kommen, um den Fahrzeuginsassen in Richtung vom Kollisionspartner weg zu beschleunigen. Für den Fall, dass der Sicherheitsgurt 10 alleine zur Einleitung einer Rückwärtsverlagerungsbewegung des Fahrzeuginsassen 7 ausreichend ist, wird es bevorzugt, diesen Vorgang durch den Sicherheitsgurt 10 alleine zu bewirken.

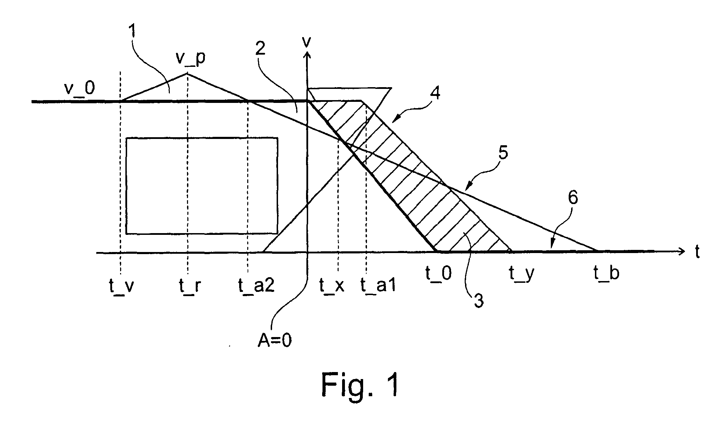

Wie es anhand von Fig. 1 der Zeichnung ersichtlich ist, erfährt der Fahrzeuginsasse 7 entlang des Rückwärtsverlagerungswegs 2 bezogen auf das Fahrzeug eine negative Relativgeschwindigkeit und die durch den Geschwindigkeitsverlauf 5 dargestellte Geschwindigkeit des Fahrzeuginsassen im Kollisionszeitpunkt t=0 ist niedriger als die Fahrzeuggeschwindigkeit v_0. In der ersten Zeitdauer t_v bis t_r wird der Fahrzeuginsasse also in Richtung zum Kollisionspartner hin beschleunigt und während der zweiten Zeitdauer t_r bis t_x in Richtung vom Kollisionspartner weg beschleunigt.

Während der Zeitdauer t_x bis t_b erfährt der Fahrzeuginsasse schließlich eine dem klassischen Unfallverlauf entsprechende zweite Vorverlagerungsbewegung 3, und wird hier sowohl vom Sicherheitsgurt 10 als auch vom Airbag 11 abgebremst.

Dabei gibt in der Zeitdauer t_x bis t_b der Sicherheitsgurt 10 unter kontrollierter Last den Weg frei und der Abstand zwischen dem Fahrzeuginsasse 7 und dem Lenkrad 12 verringert sich wieder.

Wie es anhand von Fig. 1 weiterhin ersichtlich ist, zeigt der Kurvenverlauf 4 den Geschwindigkeitsverlauf des Fahrzeuginsassen bei einem bekannten Rückhaltesystem, d.h. der Fahrzeuginsasse erfährt vom Kollisionszeitpunkt t=0 bis zum Zeitpunkt t_a1 auf Grund seiner trägen Masse noch eine weitere Verlagerungsbewegung in Richtung zum Lenkrad hin und wird dann vom bekannten Rückhaltesystem in Richtung vom Kollisionspartner weg gerichtet beschleunigt bis zum Zeitpunkt t_y und während dieser Zeitdauer t_a1 bis t_y muss der Fahrzeuginsasse die von der negativen Beschleunigung herrührende Kraft aufnehmen.

Im Gegensatz hierzu steht nach dem erfindungsgemäßen Verfahren die Zeitdauer t_a2 bis t_b zur Verfügung, die wesentlich länger ist als die vorgenannte Zeitdauer nach dem bekannten Verfahren, woraus sich ergibt, dass die mittlere Verzögerung des Fahrzeuginsassen niedriger ist und der Fahrzeuginsasse wesentlich entlastet werden kann.

Hinsichtlich vorstehend nicht näher einzeln erläuterter Merkmale der Erfindung wird im Übrigen ausdrücklich auf die entsprechende Zeichnung verwiesen.

### Bezugszeichenliste

- 1: Vorverlagerungsweg
- 2: Rückverlagerungsweg
- 3: Vorverlagerungsweg
- 4: Geschwindigkeit
- 5: Geschwindigkeit
- 6: Fahrzeuggeschwindigkeit
- 7: Fahrzeuginsasse
- 8: Sitzlehne
- 9: Airbag
- 10: Sicherheitsgurt
- 11: Airbag
- 12: Lenkrad

## Patentansprüche

1. Verfahren zur Verringerung der auf einen Fahrzeuginsassen (7) wirkenden unfallbedingten Folgen beim Aufprall des Fahrzeugs auf ein Hindernis, **dadurch gekennzeichnet, dass** vor dem Aufprall die Absolutgeschwindigkeit des Fahrzeuginsassen (7) bezogen auf das Hindernis unabhängig von der Führungsgeschwindigkeit des Fahrzeugs durch eine Verringerung der Geschwindigkeit des Fahrzeuginsassen (7) relativ zum Fahrzeug verringert wird, ohne dass der Fahrzeuginsasse (7) eine erste Verlagerungsbewegung entgegen der Fahrzeugbewegungsrichtung über seine bei der Fahrt bestimmungsgemäße Ausgangsposition hinaus erfährt.

2. Verfahren nach Anspruch 1, **gekennzeichnet durch** die Betätigung von Mitteln (9), die den Fahrzeuginsassen (7) in einer ersten Zeitdauer vor dem Aufprall auf eine Absolutgeschwindigkeit beschleunigen, die höher ist als die Führungsgeschwindigkeit des Fahrzeugs und **durch** die Betätigung von Mitteln (10, 11), die den Fahrzeuginsassen in einer zweiten Zeitdauer vor dem Aufprall auf eine Geschwindigkeit unter die Führungsgeschwindigkeit des Fahrzeugs beim Aufprall auf das Hindernis abbremsen.

3. Verfahren nach Anspruch 1 oder 2, **dadurch gekennzeichnet, dass** die Mittel (9; 10, 11) den Fahrzeuginsassen zu einer Verlagerungsbewegung in und/oder entgegen der Fahrzeugbewegungsrichtung mit jeweils weitgehend gleich bleibendem Beschleunigungsbetrag beschleunigen.

4. Verfahren nach Anspruch 2 oder 3, **dadurch gekennzeichnet, dass** die Mittel (9; 10, 11) den Fahrzeuginsassen während der ersten Zeitdauer mit einem Beschleunigungsfaktor kleiner oder gleich weitgehend der sechsfachen Erdbeschleunigung beaufschlagen.

5. Verfahren nach einem der Ansprüche 2 bis 4, **dadurch gekennzeichnet, dass** die Mittel (9; 10, 11) den Fahrzeuginsassen während der zweiten Zeitdauer mit einem Beschleunigungsfaktor beaufschlagen derart, dass der Fahrzeuginsasse vor dem Aufprall eine negative Geschwindigkeit relativ zum Fahrzeug erfährt und beibehält.

6. Verfahren nach einem der Ansprüche 2 bis 5, **dadurch gekennzeichnet, dass** die Mittel (9; 10, 11) den Fahrzeuginsassen derart beaufschlagen, dass dieser während der ersten und zweiten Zeitdauer mit seinem Oberkörper in Fahrzeugbewegungsrichtung im Bereich zwischen einer Steuereinrichtung (12) und einer Sitzeinrichtung (8) des Fahrzeugs verbleibt.

7. Vorrichtung zur Verringerung der auf einen Fahrzeuginsassen (7) wirkenden unfallbedingten Folgen beim Aufprall des Fahrzeugs auf ein Hindernis, wobei die Vorrichtung ein Fahrzeuginsassen-Rückhaltesystem mit einem oder mehreren Gassäcken (9, 11) und einem Sicherheitsgurt (10) sowie ein Kollisionserkennungssystem umfasst, **dadurch gekennzeichnet, dass** vor dem Aufprall die Absolutgeschwindigkeit des Fahrzeuginsassen (7) bezogen auf das Hindernis unabhängig von der Führungsgeschwindigkeit des Fahrzeugs durch eine Verringerung der Geschwindigkeit des Fahrzeuginsassen (7) relativ zum Fahrzeug verringert wird, ohne dass der Fahrzeuginsasse (7) eine erste Verlagerungsbewegung entgegen der Fahrzeugbewegungsrichtung über seine bei der Fahrt bestimmungsgemäße Ausgangsposition hinaus erfährt, indem während einer ersten Zeitdauer vor dem Aufprall ein Gassack (9) des Fahrzeuginsassen-Rückhaltesystems betätigt wird, um den Fahrzeuginsassen (7) auf eine Absolutgeschwindigkeit zu beschleunigen, die höher ist als die Führungsgeschwindigkeit des Fahrzeugs, und indem während einer zweiten Zeitdauer vor dem Aufprall ein Gurt (10) und/oder ein Gassack (11) des Fahrzeuginsassen-Rückhaltesystems betätigt werden, um den Fahrzeuginsassen (7) in der zweiten Zeitdauer vor dem Aufprall auf eine Geschwindigkeit unter die Führungsgeschwindigkeit des Fahrzeugs beim Aufprall auf das Hindernis abzubremsen.

## Claims

1. A method of reducing the effects of an accident on the occupant (7) of a vehicle after collision between the vehicle and an obstacle, **characterised in that** before the collision the absolute speed of the occupant (7) relative to the obstacle, irrespective of the speed of the vehicle, is reduced by reducing the speed of the occupant (7) relative to the vehicle without the occupant (7) experiencing a first movement, starting from his position determined by the speed, against the direction of motion of the vehicle.

2. A method according to claim 1, **characterised by** actuation of means (9) which during a first period of time before the impact accelerate the occupant (7) to an absolute speed greater than the driving speed of the vehicle, and by actuation of means (10, 11) which during a second period of time before the collision slow down the occupant to a speed below the speed of the vehicle when colliding with the obstacle.

3. A method according to claim 1 or claim 2, **characterised in that** the means (9, 10, 11) accelerate the occupant to motion in and/or opposite the direction of travel of the vehicle, the acceleration being substantially the same in each case.

4. A method according to claim 2 or claim 3, **characterised in that** the means (9, 10, 11) accelerate the occupant during a first period of time with an acceleration factor less than or substantially equal to six times the acceleration due to gravity.

5. A method according to any of claims 2 to 4, **characterised in that** the means (9; 10, 11) accelerate the occupant during the second period of time with an acceleration factor such that before the impact the occupant has and maintains a negative speed relative to the vehicle.

6. A method according to any of claims 2 to 5, **characterised in that** the means (9; 10, 11) accelerate the occupant such that during the first and the second period of time his upper body remains in the region between a control device (12) and a sitting device (8) in the vehicle, in the direction of motion of the vehicle.

7. A device for reducing the effects of an accident on an occupant (7) of a vehicle during a collision between the vehicle and an obstacle, wherein the device comprises an occupant retaining system containing one or more air bags (9, 11) and a safety belt (10) and a collision-recognition system, **characterised in that** before the impact the absolute speed of the occupant (7) relative to the obstacle, irrespective of the speed of the vehicle, is reduced by reducing the speed of the occupant (7) relative to the vehicle, without the occupant (7) experiencing a first movement, starting from his position determined by the speed, in the opposite direction to the vehicle, **in that** during a period of time before the impact a gas bag (9) in the vehicle retaining system is actuated in order to accelerate the occupant (7) to an absolute speed greater than the driving speed of the invention, and **in that** during a second period of time before the accident a belt (10) and/or a gas bag (11) in the vehicle retaining system is actuated in order, during the second period of time before the collision, to slow down the occupant (7) to a speed below the speed of the vehicle when striking the obstacle.

## Revendications

1. Procédé pour réduire les conséquences d'un accident sur l'occupant (7) d'un véhicule lors du choc du véhicule contre un obstacle,
caractérisé en qu'
avant le choc on diminue la vitesse absolue de l'occupant (7) par rapport à l'obstacle, indépendamment de la vitesse de circulation du véhicule, en diminuant la vitesse de l'occupant (7) par rapport au véhicule sans que l'occupant (7) effectue un premier mouvement de déplacement dans la direction opposée à la direction de déplacement du véhicule au-delà de sa position initiale correspondant à la circulation.

2. Procédé selon la revendication 1,
**caractérisé par**
l'actionnement de moyens (9) qui accélèrent l'occupant (7) dans une première période avant le choc jusqu'à une vitesse absolue supérieure à la vitesse de circulation du véhicule et par l'actionnement de moyens (10, 11) qui freinent l'occupant dans une seconde période avant le choc à une vitesse inférieure à la vitesse de circulation du véhicule lors de
son choc sur l'obstacle.

3. Procédé selon la revendication 1 ou 2,
**caractérisé en ce que**
les moyens (9, 10, 11) accélèrent l'occupant par mouvement de déplacement dans la direction de mouvement du véhicule et/ou dans la direction opposée avec une amplitude d'accélération qui reste chaque fois très largement la même.

4. Procédé selon la revendication 2 ou 3,
**caractérisé en ce que**
les moyens (9, 10, 11) sollicitent l'occupant pendant la première durée avec un coefficient d'accélération inférieur ou égal très largement à six fois l'accélération de la pesanteur.

5. Procédé selon la revendication 2 à 4,
**caractérisé en ce que**
les moyens (9, 10, 11) sollicitent l'occupant pendant la seconde période avec un coefficient d'accélération tel, qu'avant le choc, l'occupant subit une vitesse négative par rapport au véhicule et la conserve.

6. Procédé selon la revendication 2 à 5,
**caractérisé en ce que**
les moyens (9, 10, 11) sollicitent l'occupant de façon que pendant la première et la seconde période, il reste avec son buste dans la région comprise entre l'installation de direction (12) et l'installation de siège (8) du véhicule selon la direction de mouvement du véhicule.

7. Dispositif pour diminuer les conséquences sur l'occupant d'un véhicule (7) liées à un accident en cas de choc du véhicule contre un obstacle,
le dispositif comprend un système de retenue de l'occupant avec un ou plusieurs coussins gonflables (9, 11) et une ceinture de sécurité (10) ainsi qu'un système de détection de collision,
**caractérisé en ce qu'**
avant le choc on diminue la vitesse absolue de l'occupant (7) par rapport à l'obstacle indépendamment de la vitesse de circulation du véhicule en diminuant la vitesse de l'occupant (7) par rapport au véhicule sans que l'occupant (7) subisse un premier mouvement de déplacement dans la direction opposée à la direction de mouvement du véhicule au-delà de sa position de départ correspondant à l'état de circulation,
**caractérisé en ce que**
dans une première période avant la collision on actionne un coussin gonflable (9) du système de retenue de l'occupant pour accélérer l'occupant (7) à une vitesse absolue supérieure à la vitesse de circulation du véhicule et **en ce que** pendant une seconde période avant la collision, on actionne une ceinture de sécurité (10) et/ou un coussin gonflable (11) du système de retenue de l'occupant pour freiner l'occupant (7) dans cette seconde période avant la collision à une vitesse inférieure à la vitesse de circulation lors de la collision avec l'obstacle.
